# EUROPÄISCHE PATENTSCHRIFT

(11) **EP 3 743 605 B1**
(45) Veröffentlichungstag und Bekanntmachung des Hinweises auf die Patenterteilung: **24.03.2021**
(21) Anmeldenummer: 19704708.7
(22) Anmeldetag: 22.01.2019
(51) Int. Cl.: F01N 3/22, F01N 3/32, F01N 9/00, F01N 13/08, F02D 9/04, G01M 15/10

(54) **VERFAHREN UND VORRICHTUNG ZUR DRUCKREGELUNG DES ABGASES EINER ARBEITSMASCHINE**
METHOD AND APPARATUS FOR PRESSURE CONTROL OF EXHAUST GAS OF AN INTERNAL COMBUSTION ENGINE
PROCÉDÉ ET DISPOSITIF DE CONTRÔLE DE LA PRESSION DES GAZ D'ÉCHAPPEMENT D'UN MOTEUR À COMBUSTION INTERNE

(30) Priorität: 22.01.2018 AT 500472018
(43) Veröffentlichungstag der Anmeldung: 02.12.2020
(73) Patentinhaber: Kristl, Seibt & Co. Gesellschaft M.B.H., 8052 Graz (AT)
(72) Erfinder: ROSSEGGER, Wolfram, 8042 Graz (AT); ARTNER, Karl-Gerald, 8723 Kobenz (AT)
(74) Vertreter: Sonn & Partner Patentanwälte
(86) Internationale Anmeldenummer: PCT/AT2019/060021
(87) Internationale Veröffentlichungsnummer: WO 2019/140477

(56) Entgegenhaltungen:
- EP-A2- 1 336 035
- EP-A2- 1 336 035
- WO-A1-2011/074668
- WO-A1-2011/074668
- DE-A1- 4 320 880
- DE-A1- 4 320 880
- DE-A1-102015 109 317
- DE-A1-102015 109 317
- US-A- 4 109 462
- US-A- 4 109 462

## Beschreibung

Die Erfindung betrifft ein Verfahren zur Druckregelung des Abgases einer Arbeitsmaschine, insbesondere eines Verbrennungsmotors, wobei das Abgas über eine Abgasleitung von der Arbeitsmaschine abgeführt wird und die Abgasleitung eine Regeleinrichtung, vorzugsweise umfassend ein Drosselventil oder eine Drosselklappe, aufweist, die einen druckgeregelten Abschnitt der Abgasleitung begrenzt. Weiters betrifft die Erfindung eine Vorrichtung zur Druckregelung des Abgases einer Arbeitsmaschine, insbesondere eines Verbrennungsmotors, besonders bevorzugt in einem Prüfstand, aufweisend eine Abgasleitung zum Abführen von Abgas aus der Arbeitsmaschine mit einer Regeleinrichtung, vorzugsweise einer Regel- oder Drosselklappe, die einen druckgeregelten Abschnitt begrenzt.

Es ist häufig notwendig, das einer Arbeitsmaschine, insbesondere einem Verbrennungsmotor, abgeführte Abgas bezüglich des Drucks zu regeln, insbesondere beim Betrieb in einem Prüfstand. Dies ist besonders dann notwendig, wenn das Abgas mit einem Regelventil bzw. einer Drosselklappe und einem Gebläse geregelt wird. Dafür ist eine Vielzahl von Möglichkeiten bereits bekannt.

So offenbart die DE 40 15 818 C2 einen Prüfstand für Brennkraftmaschinen mit einer die benötigte Verbrennungsluft auf jeweils unabhängig von den Umgebungsbedingungen konstant vorgebbare Bedingungen aufbereitender und durch eine Zuluftleitung der Brennkraftmaschine fluidisch verbundener Zuluftanlage und einer Abgasanlage. Dabei weist die Abgasleitung vom Abgasstutzen der Brennkraftmaschine zur Abgasanlage einen vernachlässigbaren Strömungswiderstand auf. Weiters ist ein Regelventil in der Abgasleitung in Strömungsrichtung vor dem Gebläse vorgesehen, welches in dem in Strömungsrichtung davorliegenden Abschnitt der Abgasleitung einen mit dem Druck der zugeführten Verbrennungsluft übereinstimmenden Abgasdruck einregelt, wobei der in Strömungsrichtung dem Regelventil folgende Abschnitt der Abgasleitung durch das Gebläse auf einen dafür stets ausreichenden Unterdruck gehalten wird.

Weiters zeigt die DE 10 2015 109 317 A1 ein Verfahren für eine Kraftmaschine, wobei während eines Kraftmaschinenkaltstarts eine Position eines Abgasrückschlagventils auf Grundlage eines gewünschten Abgasgegendrucks eingestellt wird. Es wird ein Abgasgegendruck stromaufwärts des Ventils bestimmt und eine gewünschte Sekundärluftmenge in einen Abgaskanal stromaufwärts eines Katalysators auf Grundlage des Abgasgegendruck zugeführt. Weiters wird eine Kraftstoffeinspritzmenge und ein Zündzeitpunkt auf Grundlage des Gegendrucks eingestellt.

Die DE 30 13 444 A1 zeigt eine Einrichtung, die der Verringerung von Abgas-Schadstoffkomponenten eines Verbrennungsmotors mit einem Katalysator in einer Motorabgasleitung zur katalytischen Nachverbrennung, insbesondere in Verbindung mit einer Sekundärlufteinspeisung, dienen soll. Dabei ist eine dem Katalysator strömungsmäßig nachgeschaltete und Unterdruckwellen verstärkende, richtungsabhängige Drossel mit einem kleinen Strömungswiderstand in Motorausstoßrichtung und einem vergleichsweise größeren Strömungswiderstand in Motoransaugrichtung vorgesehen.

Des Weiteren zeigt die EP 1 336 035 A2 ein Verfahren zur Versorgung einer Verbrennungsmaschine mit einer konstanten Menge an konditioniertem Verbrennungsgas, wobei von der Verbrennungsmaschine nicht benötigtes Verbrennungsgas an der Verbrennungsmaschine vorbeigeleitet und mit deren Abgas gemischt wird und das Verbrennungsgas-/Abgas-Gemisch hinter der Verbrennungsmaschine abgesaugt wird. Weiters wird zwischen dem konditionierten Verbrennungsgas und dem Abgas hinter der Verbrennungsmaschine ein Druckgefälle zwischen 0,3 und 5 mbar eingestellt. Die zu jedem Zeitpunkt bereitgestellte Verbrennungsgas-Menge an einer Verzweigstelle zur Verbrennungsmaschine bzw. einer Bypass-Leitung um die Verbrennungsmaschine beträgt zu jedem Zeitpunkt die vom Verbrennungsmotor maximal benötigte Menge, wobei das aktuell vom Verbrennungsmotor nicht benötigte Verbrennungsgas über die Bypass-Leitung am Verbrennungsmotor vorbeigeleitet wird.

Das offenbarte Verfahren erreicht zwar, dass der Massenstrom über die Regeleinrichtungen annähernd konstant ist, wodurch einerseits die Regelung dieser Regeleinrichtungen relativ einfach ist und andererseits die Klappen nie dicht schließen müssen. Allerdings weisen die vorgeschlagenen Methoden mehrere Nachteile auf. So sind Rückwirkungen von Druckpulsationen aus dem Abgaskanal in den Ansaugkanal bei Verwendung einer Bypass-Leitung möglich. Weiters ist bei Betriebspunkten des Verbrennungsmotors mit geringem Abgas-Massenstrom der Massenstrom durch die Bypass-Leitung groß, wodurch die Gefahr einer Durchmischung von Abgas und Verbrennungsgas im Abgaskanal gegeben ist. Dies ist insbesondere relevant, wenn Abgasanalysegeräte Proben aus dem Abgaskanal entnehmen. Des Weiteren kann der Verbrennungsmotor heißes Abgas aus dem Abgaskanal über die Bypass-Leitung ansaugen und so beschädigt bzw. sein Arbeitsablauf erheblich beeinträchtigt werden.

Auch die anderen im Stand der Technik offenbarten Verfahren und Vorrichtungen weisen einen oder mehrere Nachteile auf. Sofern die Druckregelung ohne Bypass-Leitung erfolgt, wie im Stand der Technik ebenfalls beschrieben, muss die jeweilige ansaug- und/ oder abgasseitige Regeleinrichtung bei dynamischen Änderungen des Verbrennungsmotors entsprechend rasch folgen. Dies ist aber aufgrund möglicher Resonanzen und Schwankungen mit den Methoden des Standes der Technik nur unzureichend möglich. Weiters ist es bei Betriebspunkten des Verbrennungsmotors mit geringem Massenstrom, beispielsweise im Leerlauf, notwendig, dass die Regeleinrichtungen entsprechend dicht sind, um den jeweiligen Druck aufbauen und halten zu können. Während ansaugseitig aufgrund der relativ niedrigen Temperatur des konditionierten Verbrennungsgases viele geeignete Materialien für eine dicht schließende Regeleinrichtung, insbesondere eine Klappe, zur Verfügung stehen, gestaltet sich dies abgasseitig aufgrund der hohen Abgastemperaturen deutlich schwieriger. Es kann sogar sein, dass man aus Robustheitsgründen abgasseitig eine nicht dicht schließende Klappe mit einer gewissen Leckage einsetzt, wobei dies dem Konstanthalten des Drucks nach den Methoden des Standes der Technik hinderlich ist.

Aufgabe der Erfindung ist somit, insbesondere die oben genannten Probleme zu beheben oder zu verringern und das Konstanthalten des Drucks im abgasseitigen Bereich einer Arbeitsmaschine, insbesondere eines Verbrennungsmotors, zu vereinfachen bzw. zu verbessern.

Dies wird erreicht durch das Verfahren des Anspruchs 1, d.h. ein Verfahren zur Druckregelung des Abgases einer Arbeitsmaschine wie eingangs beschrieben, wobei in den druckgeregelten Abschnitt über eine Druckgasleitung geregelt Gas, vorzugsweise Luft, zugeführt wird, sodass der Druck im druckgeregelten Abschnitt im Wesentlichen auf einem konstanten Wert gehalten wird. Weiter wird dies erzielt durch die Vorrichtung des Anspruchs 12, d.h. eine Vorrichtung wie eingangs beschrieben, wobei der druckgeregelte Abschnitt eine Druckgasleitung zur geregelten Zufuhr von Gas aufweist.

Um den Druck im druckgeregelten Abschnitt auf einfache Weise konstant zu halten bzw. den notwendigen Druck aufstauen zu können, insbesondere trotz einer Leckage der Regeleinrichtung, wird über eine Druckgasleitung geregelt Gas, vorzugsweise Luft, zugeführt. Die Druckgasleitung weist somit eine Verbindung zur Abgasleitung innerhalb des druckgeregelten Abschnitts auf. Da die Druckgasleitung in Bezug auf den Massestrom regelbar ist, kann in vorteilhafter Weise der zusätzliche Massenstrom bei zunehmendem Durchsatz durch die Arbeitsmaschine auch ganz abgeregelt werden.

Bevorzugt wird das Gas an einem Anfang der Druckgasleitung unter einem Druck zugeführt, der höher ist als der Druck des Abgases in der Abgasleitung, insbesondere als der Druck innerhalb des druckgeregelten Abschnitts. Besonders bevorzugt ist der Druck am Anfang der Druckgasleitung mehr als 50 mbar, noch mehr bevorzugt mehr als 100 mbar höher als der Druck des Abgases in der Abgasleitung, insbesondere als der Druck innerhalb des druckgeregelten Abschnitts. Ebenso bevorzugt wird das zugeführte Gas mit einem Ventil und/oder einer Drossel, die besonders bevorzugt jeweils händisch und/oder elektrisch gesteuert werden, geregelt. Es ist weiters bevorzugt, dass der Massenstrom von einer Hausdruckleitung, einer anderen Gasquelle oder einem anderen Kompressor bereitgestellt wird. Diese Eigenschaften sind zweckmäßig, um in einfacher Weise, auch mit einem geringen Massenstrom, den erforderlichen Druck im druckgeregelten Abschnitt der Abgasleitung aufzubauen bzw. den Druck im druckgeregelten Abschnitt möglichst konstant zu halten und/oder um den Massestrom einfach regeln zu können.

In einer bevorzugten Ausführungsform des Verfahrens wird das Gas mit einem Massenstrom zugeführt, der geringer ist als der Massenstrom des von im Maximalbetrieb der Arbeitsmaschine abgeführten Abgases, wobei der Massenstrom besonders bevorzugt weniger als 10 Prozent, noch mehr bevorzugt weniger als 5 Prozent des Massenstroms des von im Maximalbetrieb der Arbeitsmaschine abgeführten Abgases beträgt. Insbesondere die Regelung des Massenstroms der Druckgasleitung mit einem Ventil und/oder einer Drossel sind eine Möglichkeit diesen klein zu halten.

Aufgrund der möglichen hohen Temperaturen des Abgases der Arbeitsmaschine kann es sich schwierig gestalten, eine dicht schließende Regeleinrichtung zu betreiben. Es kann somit insbesondere aus Robustheitsgründen bevorzugt sein, dass eine nicht dicht schließende Regeleinrichtung verwendet wird und die Regeleinrichtung eine gewisse Leckage aufweist. In einer bevorzugten Ausführungsform wird die Regeleinrichtung somit in einem Modus betrieben, in dem ständig ein Massenstrom aus dem druckgeregelten Bereich dringen kann, wobei der Massenstrom besonders bevorzugt zwischen 1 und 5 Prozent, noch mehr bevorzugt zwischen 1 und 2 Prozent des Massenstroms des von im Maximalbetrieb der Arbeitsmaschine abgeführten Abgases beträgt. Vorzugweise dient der Massenstrom aus der Druckgasleitung nicht dazu, die Druckverhältnisse im druckgeregelten Bereich zu ändern, sondern insbesondere dazu, einen beständigen Massenstrom durch die Regeleinrichtung bzw. eine Leckage der Regeleinrichtung auszugleichen. Weiters kann der Massenstrom von der Druckluftleitung zu einem immer vorhandenen Mindestdurchsatz an der Regeleinrichtung beitragen, wodurch eine stabilere Regelung im Nullpunkt der Regeleinrichtung sichergestellt wird. Insbesondere wenn der Massenstrom aus der Druckluftleitung zu einem Mindestdurchsatz durch die Regeleinrichtung beitragen soll, einen beständigen Massenstrom durch diese ausgleichen soll und/oder die Druckverhältnisse nicht wesentlich ändern soll bzw. nur dem Konstanthalten des Druckes dienen soll, ist es vorteilhaft, wenn die Druckgasleitung mit dem druckgeregelten Abschnitt in der Nähe der Regeleinrichtung verbunden ist. Es ist erfindungsgemäß vorgesehen, dass mit der Druckgasleitung das Gas in jenem Viertel, bevorzugt in jenem Achtel des druckgeregelten Abschnitts zugeführt, das näher an der Regeleinrichtung als an der Arbeitsmaschine ist und/oder in einem Bereich, der weniger als 30 cm, besonders bevorzugt weniger als 10 cm von der Regeleinrichtung entfernt ist.

Bevorzugt weist die Druckgasleitung einen entsprechend großen Strömungswiderstand auf, sodass der Massenstrom aus der Druckgasleitung trotz der hohen Druckdifferenz zwischen dem Anfang der Druckgasleitung und dem Druck des Abgases in der Abgasleitung, insbesondere als der Druck innerhalb des druckgeregelten Abschnitts, gering gehalten wird. Bevorzugt soll der Strömungswiderstand so groß sein, dass bei einer Druckdifferenz von mehr als 50 mbar der Massenstrom aus der Druckgasleitung in den druckgeregelten Abschnitt weniger als 10 Prozent, vorzugsweise weniger als 5 Prozent des von im Maximalbetrieb der Arbeitsmaschine abgeführten Abgases ist. Besonders bevorzugt soll der Strömungswiderstand so groß sein, dass bei einer Druckdifferenz von mehr als 100 mbar der Massenstrom aus der Druckgasleitung in den druckgeregelten Abschnitt weniger als 10 Prozent, vorzugsweise weniger als 5 Prozent des von im Maximalbetrieb der Arbeitsmaschine abgeführten Abgases ist. Es ist ebenfalls bevorzugt, wenn die Druckgasleitung einen entsprechend kleinen Durchmesser hat, sodass der Massenstrom aus der Druckgasleitung trotz der hohen Druckdifferenz gering gehalten wird, wobei der Durchmesser vorzugsweise so gering ist, da die im Zusammenhang mit dem Strömungswiderstand erwähnten bevorzugten und besonders bevorzugten Eigenschaften erzielt werden.

Es ist häufig notwendig das einer Arbeitsmaschine, insbesondere einem Verbrennungsmotor, zugeführte Verbrennungsgas bezüglich des Drucks zu regeln, insbesondere beim Betrieb in einem Prüfstand. Dies ist besonders dann notwendig, wenn das Verbrennungsgas zusätzlich mit einem Hochdruckgebläse, einer Gasaufbereitungsstrecke, insbesondere einer Luftaufbereitungsstrecke, einem Abströmventil, einer Drosselklappe und einem Drucksensor konditioniert wird. Auch hierfür ist eine Vielzahl von Möglichkeiten bereits bekannt.

Aufgabe bevorzugter Ausführungsformen der Erfindung ist somit, insbesondere auch die genannten Probleme in Bezug auf das Versorgungsgas zu beheben oder zu verringern und das Konstanthalten des Drucks auch im versorgungsgasseitigen Bereich einer Arbeitsmaschine, insbesondere eines Verbrennungsmotors, zu vereinfachen bzw. zu verbessern.

In einer bevorzugten Ausführungsform des Verfahrens wird der Arbeitsmaschine über eine Versorgungsleitung ein Verbrennungsgas, vorzugsweise Luft, zugeführt und weist die Versorgungsleitung ebenfalls eine Regeleinrichtung, vorzugsweise umfassend ein Drosselventil oder eine Drosselklappe, auf, die einen druckgeregelten Abschnitt der Versorgungsleitung begrenzt. Dabei wird über die Druckgasleitung Gas von einem Abschnitt der Versorungsleitung vor der Regeleinrichtung der Versorgungsleitung zum druckgeregelten Abschnitt der Abgasleitung geführt. Weiters wird dabei besonders bevorzugt mit einer ersten Gasfördereinrichtung, vorzugsweise einem Hochdruckgebläse, das Verbrennungsgas in die Versorgungsleitung geblasen und ein Vordruck erzeugt, das Verbrennungsgas in einer Luftaufbereitungsstrecke in Bezug auf die Temperatur und/oder Feuchtigkeit konditioniert, und/oder das Abgas in der Abgasleitung von einer zweiten Gasfördereinrichtung, besonders bevorzugt einem Gebläse, abgesaugt. Es kann somit beispielweise die Gasfördereinrichtung der Versorgungsleitung zum Bereitstellen des Gases in der Druckgasleitung mitverwendet werden.

In dieser Ausführungsform ist das Problem der Durchmischung von Abgas und Verbrennungsgas in der Abgasleitung, das sich durch eine wie in der EP 1 336 035 B1 offenbarten Bypass-Leitung insbesondere bei Betriebspunkten der Arbeitsmaschine mit einem geringen Abgas-Massenstrom ergeben kann, nicht gegeben, da der Massenstrom über die Druckluftleitung wesentlich kleiner ist, als in einer Bypass-Leitung, die die jeweiligen druckgeregelten Abschnitte der Versorungsgas- bzw. Abgasleitung verbinden würde. Weiters können Rückwirkungen von Druckpulsationen des druckgeregelten Abschnitts der Versorungsleitung in den druckgeregelten Abschnitt der Abgasleitung vermieden werden. Auch wird mit dieser erfindungsgemäßen Ausführungsform vorteilhafterweise vermieden, dass die Arbeitsmaschine im Fehlerfall heißes Abgas aus der Abgasleitung ansaugen kann, wie dies bei einer Bypass-Leitung möglich wäre, wodurch Beschädigungen bzw. Beeinträchtigungen des Arbeitsablaufes der Arbeitsmaschine vermieden werden können.

Vorteilhafterweise wird mit einem Abströmventil von der Versorgungsleitung, bevorzugt einem Bereich vor der Regeleinrichtung der Versorgungsleitung, Verbrennungsgas abgelassen, das von der Arbeitsmaschine nicht benötigt wird. Die Verwendung eines solchen Abströmventils kann unter anderem die Regelung des Druckes im druckgeregelten Abschnitt der Versorgungsleitung vereinfachen.

In einer bevorzugten Ausführungsform wird der Druck in zumindest einem der jeweils druckgeregelten Abschnitte an mehr als einer Stelle, vorzugsweise an drei Stellen, gemessen.

Prinzipiell wäre es vorteilhaft, den Druck in der Nähe der jeweiligen Regeleinrichtung zu messen, da sich Änderungen der Regeleinrichtung sofort auf den Druck nach der Regeleinrichtung auswirken. Allerdings bewirkt die Änderung der Einstellung der Regeleinrichtung nicht nur eine örtlich begrenzte Druckänderung, sondern auch eine Druckwelle, die sich mit der Schallgeschwindigkeit des Gases ausbreitet. Diese Druckwelle wird an der Arbeitsmaschine reflektiert und erreicht nach der doppelten Durchlaufzeit wieder die Regeleinrichtung bzw. den Drucksensor. Reagiert die Regelung auf diese Druckwelle mit einer Klappenänderung, wird durch die Regelung eine Schwingung angeregt, die der ersten oder einer höheren Resonanzfrequenz des druckgeregelten Abschnitts, z.B. eines Rohres, entspricht. Für ein 6 m langes, luftgefülltes Rohr bei Raumtemperatur kann die erste Resonanzfrequenz beispielsweise in etwa 29 Hz betragen.

Damit die Regelung diese Resonanzfrequenzen nicht anregt, gäbe es mehrere Möglichkeiten. So könnte man die Regelung derart langsam einstellen, dass sie bereits auf die erste Resonanzfrequenz nicht reagiert. Die bedeutet aber im Allgemeinen eine zu langsame Regeleinstellung. Weiters könnte man entsprechende Sperr- oder Kammfilter beim gemessenen Druckwert vorsehen. Dies bedeutet aber, dass man die genauen Resonanzfrequenzen kennen muss, die aber unter anderem von der Temperatur und der Rohrlänge abhängen. Des Weiteren könnte man einen Drucksensor in der Mitte des druckgeregelten Abschnitts verwenden, weil hier eine stehende Welle der ersten Resonanz einen Knoten aufweist. Dadurch ist die erste Resonanz am Drucksensor ausgelöscht und die Regelung kann entsprechend schärfer eingestellt werden, allerdings darf sie bereits auf die zweite Resonanzfrequenz nicht mehr reagieren. Eine dieser Möglichkeiten oder eine Kombination derselben können in dem erfindungsgemäßen Verfahren auch vorgesehen sein.

Durch die Messung des Drucks an mehr als einer Stelle können jedoch die Auswirkungen von Resonanzen, Schwankungen und Druckwellen auf die Druckmessung verringert oder weitgehend vermieden werden. Die Druckmessung an genau drei Stellen erzielt eine weitgehende Eliminierung der genannten Störfaktoren unter Geringhaltung des Aufwandes.

In einer bevorzugten Ausführungsform des Verfahrens beinhaltet dieses weiters, dass der Druck im jeweils druckgeregelten Abschnitt auf Grundlage eines, vorzugsweise gewichteten arithmetischen Mittelwerts der an mehreren Stellen im druckgeregelten Abschnitt gemessenen Drücke durch Regulieren der Regeleinrichtung eingestellt wird, wobei der Druck im jeweils druckgeregelten Abschnitt vorzugsweise im Wesentlichen konstant gehalten wird. Durch die Wahl spezieller Gewichte der jeweiligen Drucksensoren kann jene Resonanzfrequenz, die die Bandbreite der Regelung beschränkt, eine möglichst hohe sein, was bedeutet dass die Regelung in möglichst kurzen Zeitintervallen erfolgen kann.

Bevorzugt erfolgt die Druckregelung im jeweiligen druckgeregelten Abschnitt auf Grundlage eines Zeitmittelwerts der gemessenen Drücke, wobei der Mittelwert über einen Zeitraum gebildet wird, der gleich oder größer ist als eine Periodendauer einer Resonanz einer stehenden Druckwelle im jeweiligen druckgeregelten Abschnitt und wobei vorzugsweise der Druck im jeweils druckgeregelten Abschnitt im Wesentlichen konstant gehalten wird. Die Bildung des Zeitmittelwertes erlaubt es, die eventuell noch relevanten Resonanzen, die von der Zahl der Drucksensoren abhängen, für die Einstellung der Regeleinrichtungen zu eliminieren.

Eine bevorzugte Ausführungsform ist dadurch gekennzeichnet, dass der Druck im jeweiligen druckgeregelten Abschnitt an einer ersten Stelle in einem Anfangsbereich des jeweiligen druckgeregelten Abschnitts, an einer zweiten Stelle im Wesentlichen in der Mitte des jeweiligen druckgeregelten Abschnitts und an einer dritten Stelle in einem Endbereich des jeweiligen druckgeregelten Abschnitts gemessen wird, wobei vorzugsweise der Druck im jeweiligen druckgeregelten Abschnitt auf Grundlage eines arithmetischen Mittelwerts des Drucks an der ersten, zweiten und dritten Stelle eingestellt wird, wobei bei der Mittelwertbildung der Druck der ersten Stelle mit einem Viertel, der Druck der zweiten Stelle mit einem Halben und der Druck der dritten Stelle mit einem Viertel gewichtet wird und wobei besonders bevorzugt ein Zeitmittelwert über einen Zeitraum gebildet wird, der gleich oder größer ist als die Periodendauer einer vierten Resonanz einer stehenden Druckwelle im jeweiligen druckgeregelten Abschnitt. Vorzugsweise befindet sich der Anfangsbereich möglichst nahe am Anfang des jeweiligen druckgeregelten Abschnitts, also möglichst nahe an der Stelle, an der Abgas von der Arbeitsmaschine zugeführt wird, und/oder der Endbereich möglichst nahe am Ende des jeweiligen druckgeregelten Abschnitts, also möglichst nahe an der Regeleinrichtung. Für den druckgeregelten Abschnitt der Versorgungsleitung wird als Anfang insbesondere jene Stelle bezeichnet, an der der druckgeregelte Abschnitt mit der Regeleinrichtung der Versorgungsleitung verbunden ist. Für den druckgeregelten Abschnitt der Abgasleitung wird als Anfang insbesondere jene Stelle bezeichnet, an der der druckgeregelte Abschnitt mit der Arbeitsmaschine verbunden ist. Für den druckgeregelten Abschnitt der Versorgungsleitung wird als Ende insbesondere jene Stelle bezeichnet, an der der druckgeregelte Abschnitt mit der Arbeitsmaschine verbunden ist. Für den druckgeregelten Abschnitt der Abgasleitung wird als Ende insbesondere jene Stelle bezeichnet, an der der druckgeregelte Abschnitt mit der Regeleinrichtung der Versorgungsleitung verbunden ist. Bevorzugt erstreckt sich der Anfangsbereich vom Anfang des jeweiligen druckgeregelten Abschnitts bis zu einer Stelle, die weniger als 30 cm, besonders bevorzugt weniger als 10 cm von dieser Stelle entfernt ist und/oder der Endbereich von einer Stelle die weniger als 30 cm, besonders bevorzugt weniger als 10 cm vom Ende des jeweiligen druckgeregelten Abschnitts entfernt ist, und dem Ende des jeweiligen druckgeregelten Abschnitts. Es hat sich gezeigt, dass diese Anordnung der Drucksensoren bzw. Wahl der Gewichtung vorteilhaft ist in der Auslöschung von Resonanzen. Durch die spezielle Wahl der Gewichte werden die erste, zweite und dritte Resonanz eliminiert. Erst die vierte Resonanz hat eine Auswirkung auf die Druckwelle, wobei diese beispielsweise bei einem 6 m langen, luftgefüllten Rohr bei Raumtemperatur deutlich über 100 Hz liegt, und somit auf die Druckregelung üblicherweise keine negativen Auswirkungen mehr hat. Vorzugsweise wird außerdem ein Zeitmittelwert über einen Zeitraum gebildet, der gleich oder größer ist als die Periodendauer der vierten Resonanz einer stehenden Druckwelle im jeweiligen druckgeregelten Abschnitt, wodurch die vierte und höhere Resonanzen nicht mehr die Messung beeinflussen.

Die abgasseitige und die versorgungsgasseitige Regelung folgt prinzipiell ähnlichen Prinzipien. Es besteht aber ein wesentlicher Unterschied in den Resonanzfrequenzen. Während ansaugseitig die Temperatur aufgrund der üblicherweise vorgenommenen Konditionierung des Verbrennungsgases bekannt ist, kann sich die Temperatur des Abgases - abhängig vom Betriebspunkt der Arbeitsmaschine - schnell ändern, somit wäre eine Lösung mit Hilfe eines Sperr- oder Kammfilters abgasseitig wesentlich schwerer realisierbar. Nichtsdestoweniger können erfindungsgemäß sowohl versorgungs- als auch abgasseitig Sperr- oder Kammfilter im druckgeregelten Abschnitt vorgesehen sein. Bezugnehmend auf die erfindungsgemäße Vorrichtung weist die Druckgasleitung vorteilhafterweise ein Ventil und/oder eine Drossel auf, die bevorzugt jeweils händisch und/oder elektrisch gesteuert werden können. Es ist erfindungsgemäß vorgesehen, dass die Druckgasleitung in jenem Viertel, bevorzugt in jenem Achtel des druckgeregelten Abschnitts mit diesem verbunden, das näher an der Regeleinrichtung als an der Arbeitsmaschine ist und/oder in einem Bereich, der weniger als 30 cm, besonders bevorzugt weniger als 10 cm von der Regeleinrichtung entfernt ist. Bevorzugt weist die Druckgasleitung einen entsprechend großen Strömungswiderstand auf, sodass der Massenstrom aus der Druckgasleitung trotz der hohen Druckdifferenz zwischen dem Anfang der Druckgasleitung und dem Druck des Abgases in der Abgasleitung, insbesondere als der Druck innerhalb des druckgeregelten Abschnitts, gering gehalten wird. Bevorzugt soll der Strömungswiderstand so groß sein, dass bei einer Druckdifferenz von mehr als 50 mbar der Massenstrom aus der Druckgasleitung in den druckgeregelten Abschnitt weniger als 10 Prozent, vorzugsweise weniger als 5 Prozent des von im Maximalbetrieb der Arbeitsmaschine abgeführten Abgases ist. Besonders bevorzugt soll der Strömungswiderstand so groß sein, dass bei einer Druckdifferenz von mehr als 100 mbar der Massenstrom aus der Druckgasleitung in den druckgeregelten Abschnitt weniger als 10 Prozent, vorzugsweise weniger als 5 Prozent des von im Maximalbetrieb der Arbeitsmaschine abgeführten Abgases ist. Es ist ebenfalls bevorzugt, wenn die Druckgasleitung einen entsprechend kleinen Durchmesser hat, sodass der Massenstrom aus der Druckgasleitung tortz der hohen Druckdifferenz gering gehalten wird, wobei der Durchmesser vorzugsweise so gering ist, da die im Zusammenhang mit dem Strömungswiderstand erwähnten bevorzugten und besonders bevorzugten Eigenschaften erzielt werden.

In einer bevorzugten Ausführungsform der Vorrichtung weist die Vorrichtung eine Versorgungsleitung zum Zuführen von Verbrennungsgas zum Verbrennungsmotor mit einer Regeleinrichtung, vorzugsweise einer Regel- oder Drosselklappe, die einen druckgeregelten Abschnitt der Versorgungsleitung begrenzt, auf und die Druckgasleitung ist mit der Versorgungsleitung vor der Regeleinrichtung der Versorgungsleitung verbunden. Es ist besonders bevorzugt, wenn der druckgeregelte Abschnitt der Versorgungsleitung ein Abströmventil aufweist, die Versorgungsleitung eine erste Gasfördereinrichtung, vorteilhafterweise ein Hochdruckgebläse, und/oder eine Gasaufbereitungsstrecke aufweist und/oder die Abgasleitung eine zweite Gasfördereinrichtung, vorzugsweise ein Gebläse, aufweist.

Vorteilhafterweise weist der druckgeregelte Abschnitt der Versorgungsgas- und/oder der Abgasleitung mehr als einen Drucksensor, vorzugsweise drei Drucksensoren, auf.

Die Erfindung wird nachstehend anhand von in den Zeichnungen dargestellten bevorzugten Ausführungsbeispielen, auf welche sie jedoch keinesfalls beschränkt sein soll, noch näher erläutert.

Im Einzelnen zeigen in den Zeichnungen:
Fig. 1 eine bevorzugte Ausführungsform der Vorrichtung zur Druckregelung des Abgases einer Arbeitsmaschine mit einer Druckgasleitung;
Fig. 2 eine bevorzugte Ausführungsform der Vorrichtung zur Druckregelung des Versorgungs- und Abgases einer Arbeitsmaschine mit einer Druckgasleitung und mit einer Gasaufbereitungsstrecke.
Fig. 3 eine bevorzugte Ausführungsform des versorgungsgasseitigen Teils der Vorrichtung mit drei Drucksensoren;
Fig. 4 eine bevorzugte Ausführungsform des abgasseitigen Teils der Vorrichtung mit drei Drucksensoren;

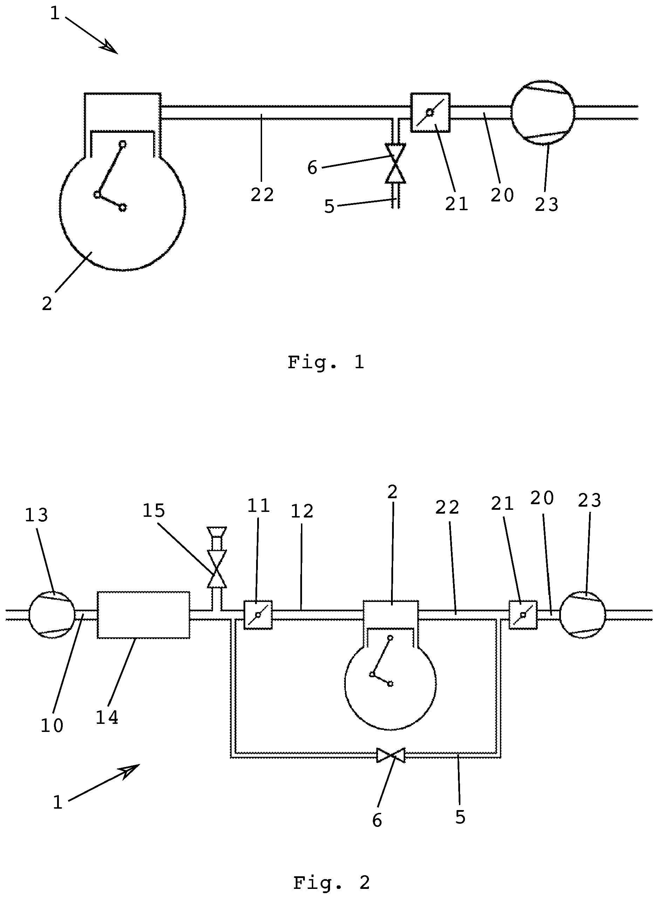

Fig. 1 zeigt eine bevorzugte Ausführungsform der erfindungsgemäßen Vorrichtung 1, wobei das Abgas der Arbeitsmaschine 2 über die Abgasleitung 20 abgeführt wird. Die Vorrichtung weist eine Druckgasleitung 5 mit einer Drossel oder einem Ventil 6 auf, wobei die Druckgasleitung 5 vorteilhafterweise einen großen Strömungswiderstand aufweist. Weiters weist die Abgasleitung 20 eine Gasfördereinrichtung 23, vorzugsweise ein Gebläse, auf, mit dem das Abgas abgesaugt wird. Die Druckgasleitung 5 befindet sich vorteilhafterweise möglichst nahe an der Regeleinrichtung 21. Über sie wird ein kleiner Gas-Massenstrom bereitgestellt, beispielsweise von von einer Hausdruckleitung, einer anderen Gasquelle, besonders bevorzugt einer Luftquelle, oder einem anderen Kompressor, der dazu beiträgt, dass der Druck im druckgeregelten Abschnitt 22, gegebenenfalls trotz einer Leckage des Regeleinrichtung 21, im Wesentlichen konstant gehalten werden kann.

Fig. 2 zeigt eine eine bevorzugte Ausführungsform der erfindungsgemäßen Vorrichtung 1 zur Druckregelung des Verbrennungs- und/oder Abgases einer Arbeitsmaschine 2. Dabei weist die Versorgungsleitung 10 eine erste Gasfördereinrichtung 13, vorzugweise ein Hochdruckgebläse, eine Gasaufbereitungsstrecke 14 und ein Abströmventil 15 auf. Die Gasfördereinrichtung 13 bläst Verbrennungsgas in die Versorgungsleitung 10, welches daraufhin in der Gasaufbereitungsstrecke 14 konditioniert wird. Über das Abströmventil 15 wird der Vordruck reguliert und von der Arbeitsmaschine 2 nicht benötigtes Verbrennungsgas abgelassen, bevor das Verbrennungsgas durch die Regeleinrichtung 11 der Versorgungsleitung 10 in den druckgeregelten Abschnitt 12 gelangt.

Die Abgasleitung 20 weist wiederum eine Regeleinrichtung 21, die einen druckgeregelten Abschnitt 22 begrenzt, und eine zweite Gasfördereinrichtung 23 auf. Eine Druckgasleitung 5, aufweisend eine Drossel oder ein Ventil 6, verbindet die Versorgungsleitung 10 vor der Regeleinrichtung 11 mit dem druckgeregelten Abschnitt 22 der Abgasleitung 20, wobei das Druckgefälle über die Druckgasleitung 5 vorzugsweise mehr als 50 mbar, besonders bevorzugt mehr als 100 mbar beträgt. Für den Verbindungspunkt der Druckgasleitung 5 mit der Versorgungsleitung 10 können dieselben vorteilhaften Anforderungen relativ zur Regeleinrichtung 11 der Versorgungsleitung 10 gelten, wie sie relativ zur Regeleinrichtung 21 der Abgasleitung 20 erwähnt wurden.

Über die Druckgasleitung 5 wird Gas von einem Abschnitt der Versorgungsleitung 10 vor der Regeleinrichtung 11 der Versorgungsleitung 10 zum druckgeregelten Abschnitt 22 der Abgasleitung 20 geführt, wobei der Massenstrom mit einem Ventil oder einer Drossel 6 in der Druckgasleitung 5 geregelt wird.

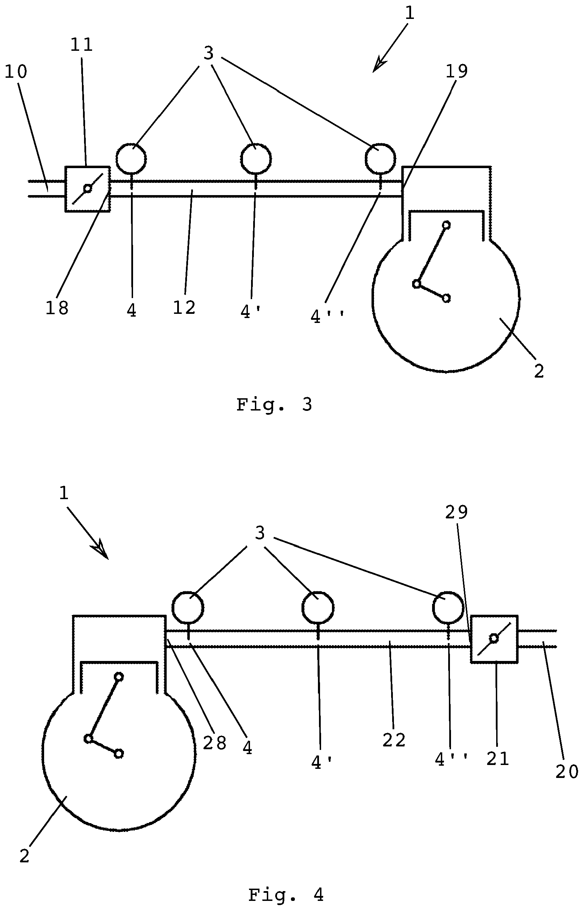

Fig. 3 zeigt eine Ausführungsform des versorgungsgasseitigen Teils der Vorrichtung 1 zur Druckregelung des Verbrennungs- und/ oder Abgases einer Arbeitsmaschine 2. Dabei wird über eine Versorgungsleitung 10 Verbrennungsgas der Arbeitsmaschine 2 zugeführt. Dabei begrenzt eine versorgungsgasseitige Regeleinrichtung 11 einen druckgeregelten Abschnitt 12 der Versorgungsleitung 10. Der Druck wird an drei Stellen 4, 4', 4'' des druckgeregelten Abschnitts 12 von Drucksensoren 3 gemessen. Dabei befindet sich eine erste Stelle 4 in einem Anfangsbereich des druckgeregelten Abschnitts 12, eine zweite Stelle 4' im Wesentlichen in der Mitte des druckgeregelten Abschnitts 12 und eine dritte Stelle 4" in einem Endbereich des druckgeregelten Abschnitts 12. Dabei ist die erste Stelle 4 vorzugsweise möglichst nahe am Anfang 18 des druckgeregelten Abschnitts und die dritte Stelle 4" möglichst nahe am Ende 19 des druckgeregelten Abschnitts.

Vorteilhafterweise wird der Druck im druckgeregelten Abschnitt 12 auf Grundlage eines arithmetischen Mittelwerts des Drucks an der ersten, zweiten und dritten Stelle 4, 4', 4'' eingestellt, wobei bei der Mittelwertbildung der Druck der ersten Stelle 4 mit einem Viertel, der Druck der zweiten Stelle 4' mit einem Halben und der Druck der dritten Stelle 4" mit einem Viertel gewichtet wird und wobei ein Zeitmittelwert über einen Zeitraum gebildet wird, der gleich oder größer ist als die Periodendauer einer vierten Resonanz einer stehenden Druckwelle im druckgeregelten Abschnitt 12.

Fig. 4 zeigt eine Ausführungsform des abgasseitigen Teils der Vorrichtung 1 zur Druckregelung des Verbrennungs- und/oder Abgases einer Arbeitsmaschine 2. Dabei wird über eine Abgasleitung 20 Verbrennungsgas der Arbeitsmaschine 2 zugeführt. Dabei begrenzt eine abgasseitige Regeleinrichtung 21 einen druckgeregelten Abschnitt 22 der Abgasleitung 20. Die weitere Ausführung der Erfindung erfolgt wie im Zusammenhang mit Fig. 3 erläutert. Dabei ist die erste Stelle 4 vorzugsweise möglichst nahe am Anfang 28 des druckgeregelten Abschnitts und die dritte Stelle 4" möglichst nahe am Ende 29 des druckgeregelten Abschnitts.

Die in den Figuren dargestellten und im Zusammenhang mit diesen erläuterten Ausführungsbeispiele dienen der Erläuterung der Erfindung und sind für diese nicht beschränkend.

## Patentansprüche

1. Verfahren zur Druckregelung des Abgases einer Arbeitsmaschine (2), insbesondere eines Verbrennungsmotors, wobei das Abgas über eine Abgasleitung (20) von der Arbeitsmaschine abgeführt wird und die Abgasleitung (20) eine Regeleinrichtung (21), vorzugsweise umfassend ein Drosselventil oder eine Drosselklappe, aufweist, die einen druckgeregelten Abschnitt (22) der Abgasleitung (20) begrenzt,
wobei in den druckgeregelten Abschnitt (22) über eine Druckgasleitung (5) geregelt Gas, vorzugsweise Luft, zugeführt wird, sodass der Druck im druckgeregelten Abschnitt (22) im Wesentlichen auf einem konstanten Wert gehalten wird,
**dadurch gekennzeichnet, dass**
mit der Druckgasleitung (5) das Gas in jenem Viertel des druckgeregelten Abschnitts (22) zugeführt wird, das näher an der Regeleinrichtung (21) als an der Arbeitsmaschine (2) ist und/ oder in einem Bereich, der weniger als 30 cm von der Regeleinrichtung (21) entfernt ist.

2. Verfahren nach Anspruch 1, **dadurch gekennzeichnet, dass**
das Gas am Anfang der Druckgasleitung unter einem Druck zugeführt wird, der höher ist als der Druck des Abgases in der Abgasleitung (20), insbesondere im druckgeregelten Abschnitt (22), wobei der Druck vorzugsweise mehr als 50 mbar, besonders bevorzugt mehr als 100 mbar höher ist als der Druck des Abgases in der Abgasleitung (20), und/oder dass
das zugeführte Gas mit einem Ventil und/oder einer Drossel, die bevorzugt jeweils händisch und/oder elektrisch gesteuert werden, geregelt wird, wobei
der Massenstrom vorzugsweise von einer Hausdruckleitung, einer anderen Gasquelle oder einem anderen Kompressor bereitgestellt wird.

3. Verfahren nach einem der vorhergehenden Ansprüche, **dadurch gekennzeichnet, dass** das Gas mit einem Massenstrom zugeführt wird, der geringer ist als der Massenstrom des von im Maximalbetrieb der Arbeitsmaschine (2) abgeführten Abgases, wobei der Massenstrom vorzugsweise weniger als 10 Prozent, besonders bevorzugt weniger als 5 Prozent des Massenstroms des von im Maximalbetrieb der Arbeitsmaschine (2) abgeführten Abgases beträgt.

4. Verfahren nach einem der vorhergehenden Ansprüche, **dadurch gekennzeichnet, dass** die Regeleinrichtung (21) in einem Modus betrieben wird, in dem im Wesentlichen ständig ein Massenstrom aus dem druckgeregelten Bereich (22) dringen kann, wobei der Massenstrom vorzugsweise zwischen 1 und 5 Prozent, besonders bevorzugt zwischen 1 und 2 Prozent des Massenstroms des von im Maximalbetrieb der Arbeitsmaschine (2) abgeführten Abgases beträgt.

5. Verfahren nach einem der vorhergehenden Ansprüche, **dadurch gekennzeichnet, dass** mit der Druckgasleitung (5) das Gas jenem Achtel des druckgeregelten Abschnitts (22) zugeführt wird, das näher an der Regeleinrichtung (21) als an der Arbeitsmaschine (2) ist und/oder in einem Bereich, der weniger als 10 cm von der Regeleinrichtung (21) entfernt ist.

6. Verfahren nach einem der vorhergehenden Ansprüche, **dadurch gekennzeichnet, dass** die Druckgasleitung (5) einen Strömungswiderstand aufweist, der im Wesentlichen oder zumindest so groß ist, dass bei einer Differenz des Drucks von am Anfang der Druckgasleitung (5) zugeführtem Gas und Druck des Abgases in der Abgasleitung (20), insbesondere im druckgeregelten Abschnitt (22), von mehr als 50 mbar, vorzugsweise mehr als 100 mbar, der Massenstrom aus der Druckgasleitung (5) in den druckgeregelten Abschnitt (22) weniger als 10 Prozent, vorzugsweise weniger als 5 Prozent des von im Maximalbetrieb der Arbeitsmaschine (2) abgeführten Abgases beträgt.

7. Verfahren nach einem der vorhergehenden Ansprüche, **dadurch gekennzeichnet, dass** der Arbeitsmaschine (2) über eine Versorgungsleitung (10) ein Verbrennungsgas, vorzugsweise Luft, zugeführt wird und dass die Versorgungsleitung (10) eine Regeleinrichtung (11), vorzugsweise umfassend ein Drosselventil oder eine Drosselklappe, aufweist, die einen druckgeregelten Abschnitt (12) der Versorgungsleitung (10) begrenzt, wobei über die Druckgasleitung (5) Gas von einem Abschnitt der Versorgungsleitung (10) vor der Regeleinrichtung (11) der Versorgungsleitung (10) zum druckgeregelten Abschnitt (22) der Abgasleitung (20) geführt wird, wobei vorzugsweise
mit einer ersten Gasfördereinrichtung (13), besonders bevorzugt einem Hochdruckgebläse, das Verbrennungsgas in die Versorgungsleitung (20) geblasen und ein Vordruck erzeugt wird,
das Verbrennungsgas in einer Luftaufbereitungsstrecke (14) in Bezug auf die Temperatur und Feuchtigkeit konditioniert wird und/oder
das Abgas in der Abgasleitung (20) von einer zweiten Gasfördereinrichtung (23), besonders bevorzugt einem Gebläse, abgesaugt wird.

8. Verfahren nach Anspruch 7, **dadurch gekennzeichnet, dass** mit einem Abströmventil (15) von der Versorgungsleitung (10), bevorzugt einem Bereich vor der Regeleinrichtung (11) der Versorgungsleitung (10), Verbrennungsgas abgelassen wird, das von der Arbeitsmaschine (2) nicht benötigt wird.

9. Verfahren nach einem der vorhergehenden Ansprüche, **dadurch gekennzeichnet, dass** der Druck in zumindest einem der jeweils druckgeregelten Abschnitte (12, 22) an mehr als einer Stelle, vorzugsweise an drei Stellen, gemessen wird.

10. Verfahren nach Anspruch 9, **dadurch gekennzeichnet, dass** Druck im jeweiligen druckgeregelten Abschnitt (12, 22) auf Grundlage eines, vorzugsweise gewichteten arithmetischen Mittelwerts der an mehreren Stellen im druckgeregelten Abschnitt (12, 22) gemessenen Drücke durch Regulieren der jeweiligen Regeleinrichtung (11, 21) eingestellt wird.

11. Verfahren nach Anspruch 9 oder 10, **dadurch gekennzeichnet, dass** der Druck im jeweiligen druckgeregelten Abschnitt (12, 22) an einer ersten Stelle (4) in einem Anfangsbereich des jeweiligen druckgeregelten Abschnitts (12, 22), an einer zweiten Stelle (4') im Wesentlichen in der Mitte des jeweiligen druckgeregelten Abschnitts (12, 22) und an einer dritten Stelle (4'') in einem Endbereich des jeweiligen druckgeregelten Abschnitts (12, 22) gemessen wird, wobei vorzugsweise
der Anfangsbereich sich von einem Anfang (18, 28) des druckgeregelten Abschnitts (12, 22) bis zu weniger als 30 cm, bevorzugt bis zu weniger als 10 cm vom Anfang (18, 28) des jeweiligen druckgeregelten Abschnitts (12, 22) entfernt erstreckt,
der Endbereich sich von einem Ende (19, 29) des jeweiligen druckgeregelten Abschnitts (12, 22) bis zu weniger als 30 cm, bevorzugt bis zu weniger als 10 cm von einem Ende (19, 29) des jeweiligen druckgeregelten Abschnitt (12, 22) entfernt erstreckt, und/oder
der Druck im jeweiligen druckgeregelten Abschnitt (12, 22) auf Grundlage eines arithmetischen Mittelwerts des Drucks an der ersten, zweiten und dritten Stelle (4, 4', 4'') eingestellt wird, wobei bei der Mittelwertbildung der Druck der ersten Stelle (4) mit einem Viertel, der Druck der zweiten Stelle (4') mit einem Halben und der Druck der dritten Stelle (4'') mit einem Viertel gewichtet wird und wobei besonders bevorzugt ein Zeitmittelwert über einen Zeitraum gebildet wird, der gleich oder größer ist als die Periodendauer einer vierten Resonanz einer stehenden Druckwelle im jeweiligen druckgeregelten Abschnitt (12, 22).

12. Vorrichtung (1) zur Druckregelung des Abgases einer Arbeitsmaschine (2), insbesondere eines Verbrennungsmotors, besonders bevorzugt in einem Prüfstand, aufweisend
eine Abgasleitung (20) zum Abführen von Abgas aus der Arbeitsmaschine (2) mit einer Regeleinrichtung (21), vorzugsweise einer Regel- oder Drosselklappe, die einen druckgeregelten Abschnitt (22) begrenzt,
wobei der druckgeregelte Abschnitt (22) eine Druckgasleitung (5) zur geregelten Zufuhr von Gas aufweist,
**dadurch gekennzeichnet, dass**
die Druckgasleitung (5) in jenem Viertel des druckgeregelten Abschnitts (22) mit diesem verbunden ist, das näher an der Regeleinrichtung (21) als an der Arbeitsmaschine (2) ist und/oder in einem Bereich, der weniger als 30 cm von der Regeleinrichtung (21) entfernt ist.

13. Vorrichtung nach Anspruch 12, **dadurch gekennzeichnet, dass** die Druckgasleitung (5) ein Ventil und/oder eine Drossel aufweist, die bevorzugt jeweils händisch und/oder elektrisch gesteuert werden können,
die Druckgasleitung (5) in jenem Achtel des druckgeregelten Abschnitts (22) mit diesem verbunden ist, das näher an der Regeleinrichtung (21) als an der Arbeitsmaschine (2) ist und/oder in einem Bereich, der weniger als 10 cm von der Regeleinrichtung (21) entfernt ist und/oder
die Druckgasleitung (5) einen Strömungswiderstand aufweist, der im Wesentlichen oder zumindest so groß ist, dass bei einer Differenz des Drucks von am Anfang der Druckgasleitung (5) zugeführtem Gas und Druck des Abgases in der Abgasleitung (20), insbesondere im druckgeregelten Abschnitt (22), von mehr als 50 mbar, vorzugsweise mehr als 100 mbar, der Massenstrom aus der Druckgasleitung (5) in den druckgeregelten Abschnitt (22) weniger als 10 Prozent, vorzugsweise weniger als 5 Prozent des von im Maximalbetrieb der Arbeitsmaschine (2) abgeführten Abgases beträgt.

14. Vorrichtung nach Anspruch 12 oder 13, **dadurch gekennzeichnet, dass** die Vorrichtung (1) eine Versorgungsleitung (10) zum Zuführen von Verbrennungsgas zur Arbeitsmaschine (2) mit einer Regeleinrichtung (11), vorzugsweise einer Regel- oder Drosselklappe, die einen druckgeregelten Abschnitt (12) der Versorgungsleitung (10) begrenzt, aufweist und dass die Druckgasleitung (5) mit der Versorgungsleitung (10) vor der Regeleinrichtung (11) der Versorgungsleitung (10) verbunden ist,
wobei vorzugsweise
der druckgeregelte Abschnitt (11) der Versorgungsleitung (10) ein Abströmventil (15) aufweist,
die Versorgungsleitung (10) eine erste Gasfördereinrichtung (13), besonders bevorzugt ein Hochdruckgebläse, und/oder eine Gasaufbereitungsstrecke (14) aufweist und/oder
die Abgasleitung (20) eine zweite Gasfördereinrichtung (23), vorzugsweise ein Gebläse, aufweist.

15. Vorrichtung nach einem der Ansprüche 12 bis 14, **dadurch gekennzeichnet, dass** der jeweilige druckgeregelte Abschnitt (12, 22) mehr als einen Drucksensor (3), vorzugsweise drei Drucksensoren, aufweist.

## Claims

1. Method for controlling the pressure of the exhaust gas of a machine (2), in particular an internal combustion engine, the exhaust gas being discharged from the machine via an exhaust gas line (20) and the exhaust gas line (20) having a control device (21), preferably comprising a throttle valve or a throttle plate, which control device defines a pressure-controlled portion (22) of the exhaust gas line (20), gas, preferably air, being supplied to the pressure-controlled portion (22) via a compressed gas line (5) in a controlled manner such that the pressure in the pressure-controlled portion (22) is substantially kept at a constant value, **characterised in that** the gas is supplied, by means of the compressed gas line (5), to the quarter of the pressure-controlled portion (22) that is closer to the control device (21) than to the machine (2) and/or in a region which is less than 30 cm away from the control device (21).

2. Method according to claim 1, **characterised in that** the gas is supplied at the start of the compressed gas line at a pressure which is higher than the pressure of the exhaust gas in the exhaust gas line (20), in particular in the pressure-controlled portion (22), the pressure preferably being more than 50 mbar, particularly preferably more than 100 mbar, higher than the pressure of the exhaust gas in the exhaust gas line (20), and/or **in that** the supplied gas is controlled by a valve and/or a throttle, which are preferably each controlled manually and/or electrically, the mass flow rate preferably being provided by a domestic pressure line, another gas source or another compressor.

3. Method according to either of the preceding claims, **characterised in that** the gas is supplied at a mass flow rate which is less than the mass flow rate of the exhaust gas discharged from the machine (2) in the maximum operating mode, the mass flow rate preferably being less than 10 percent, particularly preferably less than 5 percent, of the mass flow rate of the exhaust gas discharged from the machine (2) in the maximum operating mode.

4. Method according to any of the preceding claims, **characterised in that** the control device (21) is operated in a mode in which a mass flow rate can escape the pressure-controlled region (22) at a substantially constant rate, the mass flow rate preferably being between 1 and 5 percent, particularly preferably between 1 and 2 percent, of the mass flow rate of the exhaust gas discharged from the machine (2) in the maximum operating mode.

5. Method according to any of the preceding claims, **characterised in that** the gas is supplied, by means of the compressed gas line (5), to the eighth of the pressure-controlled portion (22) that is closer to the control device (21) than to the machine (2) and/or in a region which is less than 10 cm away from the control device (21).

6. Method according to any of the preceding claims, **characterised in that** the compressed gas line (5) has a flow resistance which is substantially so high or at least so high that, when there is a difference in pressure between the gas supplied at the start of the compressed gas line (5) and the pressure of the exhaust gas in the exhaust gas line (20), in particular in the pressure-controlled portion (22), of more than 50 mbar, preferably more than 100 mbar, the mass flow rate from the compressed gas line (5) into the pressure-controlled portion (22) is less than 10 percent, preferably less than 5 percent, of the exhaust gas discharged from the machine (2) in the maximum operating mode.

7. Method according to any of the preceding claims, **characterised in that** a combustion gas, preferably air, is supplied to the machine (2) via a supply line (10), and **in that** the supply line (10) has a control device (11), preferably comprising a throttle valve or a throttle plate, which control device defines a pressure-controlled portion (12) of the supply line (10), gas being conveyed from a portion of the supply line (10) upstream of the control device (11) of the supply line (10) to the pressure-controlled portion (22) of the exhaust gas line (20) via the compressed gas line (5), the combustion gas being blown into the supply line (20) and an inlet pressure being generated preferably by means of a first gas conveying device (13), particularly preferably a high-pressure fan, the combustion gas being conditioned in an air processing portion (14) with respect to temperature and humidity, and/or the exhaust gas in the exhaust gas line (20) being extracted by a second gas conveying device (23), particularly preferably a fan.

8. Method according to claim 7, **characterised in that** combustion gas that is not required by the machine (2) is removed from the supply line (10), preferably a region upstream of the control device (11) of the supply line (10), by means of a discharge valve (15).

9. Method according to any of the preceding claims, **characterised in that** the pressure in at least one of the pressure-controlled portions (12, 22) is measured at more than one location, preferably at three locations.

10. Method according to claim 9, **characterised in that** pressure in each pressure-controlled portion (12, 22) is adjusted by regulating the relevant control device (11, 21) on the basis of a preferably weighted arithmetic average value of the pressures measured at a plurality of locations in the pressure-controlled portion (12, 22).

11. Method according to either claim 9 or claim 10, **characterised in that** the pressure in each pressure-controlled portion (12, 22) is measured at a first location (4) in a start region of the particular pressure-controlled portion (12, 22), at a second location (4') substantially in the centre of the particular pressure-controlled portion (12, 22) and at a third location (4") in an end region of the particular pressure-controlled portion (12, 22), the start region preferably extending from a start (18, 28) of the pressure-controlled portion (12, 22) up to less than 30 cm, preferably up to less than 10 cm, from the start (18, 28) of the particular pressure-controlled portion (12, 22), the end region extending from an end (19, 29) of the particular pressure-controlled portion (12, 22) up to less than 30 cm, preferably up to less than 10 cm, from an end (19, 29) of the particular pressure-controlled portion (12, 22), and/or the pressure in each pressure-controlled portion (12, 22) being adjusted on the basis of an arithmetic average value of the pressure at the first, second and third locations (4, 4', 4"), the pressure at the first location (4) being weighted by a quarter, the pressure at the second location (4') being weighted by a half and the pressure at the third location (4") being weighted by a quarter when the average value is being established, and a time average value particularly preferably being established over a time period that is greater than or equal to the period duration of a fourth resonance of a standing pressure wave in the particular pressure-controlled portion (12, 22).

12. Apparatus (1) for controlling the pressure of the exhaust gas of a machine (2), in particular an internal combustion engine, particularly preferably on a test stand, comprising an exhaust gas line (20) for discharging exhaust gas from the machine (2), which exhaust gas line comprises a control device (21), preferably a butterfly valve or throttle plate, which defines a pressure-controlled portion (22), the pressure-controlled portion (22) having a compressed gas line (5) for supplying gas in a controlled manner, **characterised in that** the compressed gas line (5) is connected to the pressure-controlled portion (22) in the quarter of said pressure-controlled portion that is closer to the control device (21) than to the machine (2) and/or in a region which is less than 30 cm away from the control device (21).

13. Apparatus according to claim 12, **characterised in that** the compressed gas line (5) has a valve and/or a throttle, which can preferably each be controlled manually and/or electrically, the compressed gas line (5) is connected to the pressure-controlled portion (22) in the eighth of said pressure-controlled portion that is closer to the control device (21) than to the machine (2) and/or in a region which is less than 10 cm away from the control device (21), and/or the compressed gas line (5) has a flow resistance which is substantially so high or at least so high that, when there is a difference in pressure between the gas supplied at the start of the compressed gas line (5) and the pressure of the exhaust gas in the exhaust gas line (20), in particular in the pressure-controlled portion (22), of more than 50 mbar, preferably more than 100 mbar, the mass flow rate from the compressed gas line (5) into the pressure-controlled portion (22) is less than 10 percent, preferably less than 5 percent, of the exhaust gas discharged from the machine (2) in the maximum operating mode.

14. Apparatus according to either claim 12 or claim 13, **characterised in that** the apparatus (1) has a supply line (10) for supplying combustion gas to the machine (2), which supply line comprises a control device (11), preferably a butterfly valve or throttle plate, which defines a pressure-controlled portion (12) of the supply line (10), and **in that** the compressed gas line (5) is connected to the supply line (10) upstream of the control device (11) of the supply line (10), the pressure-controlled portion (11) of the supply line (10) preferably having a discharge valve (15), the supply line (10) having a first gas conveying device (13), particularly preferably a high-pressure fan, and/or a gas processing portion (14), and/or the exhaust gas line (20) having a second gas conveying device (23), preferably a fan.

15. Apparatus according to any of claims 12 to 14, **characterised in that** each pressure-controlled portion (12, 22) has more than one pressure sensor (3), preferably three pressure sensors.

## Revendications

1. Procédé de régulation de pression du gaz d'échappement d'une machine de travail (2), en particulier d'un moteur à combustion, dans lequel le gaz d'échappement est évacué par une conduite d'échappement (20) de la machine de travail et la conduite d'échappement (20) présente un dispositif de régulation (21), de préférence comprenant une soupape d'étranglement ou un clapet d'étranglement, qui délimite une section (22) à pression régulée de la conduite d'échappement (20),
dans lequel du gaz, de préférence de l'air, est amené dans la section (22) à pression régulée par le biais d'une conduite de gaz comprimé (5) de sorte que la pression soit maintenue sensiblement à une valeur constante dans la section (22) à pression régulée,
**caractérisé en ce que**
le gaz est amené avec la conduite de gaz comprimé (5) dans le quart de la section (22) à pression régulée qui est plus près du dispositif de régulation (21) que de la machine de travail (2) et/ou dans une zone qui est éloignée de moins de 30 cm du dispositif de régulation (21).

2. Procédé selon la revendication 1, **caractérisé en ce que**
le gaz est amené au début de la conduite de gaz comprimé sous une pression qui est supérieure à la pression du gaz d'échappement dans la conduite d'échappement (20), en particulier dans la section (22) à pression régulée, dans lequel la pression est supérieure de préférence de plus de 50 mbar, de manière particulièrement préférée de plus de 100 mbar à la pression du gaz d'échappement dans la conduite d'échappement (20), et/ou que
le gaz amené est régulé avec une soupape et/ou un étranglement, qui sont de préférence commandés respectivement à la main et/ou électriquement, dans lequel le courant massique est de préférence fourni par une conduite de pression d'immeuble, une autre source de gaz ou un autre compresseur.

3. Procédé selon l'une des revendications précédentes, **caractérisé en ce que** le gaz est amené avec un courant massique qui est plus faible que le courant massique du gaz d'échappement évacué dans le fonctionnement maximal de la machine de travail (2), dans lequel le courant massique est de préférence inférieur à 10 pour cent, de manière particulièrement préférée inférieur à 5 pour cent du courant massique du gaz d'échappement évacué dans le fonctionnement maximal de la machine de travail (2).

4. Procédé selon l'une des revendications précédentes, **caractérisé en ce que** le dispositif de régulation (21) est actionné dans un mode, dans lequel sensiblement en permanence un courant massique peut pénétrer depuis la zone (22) à pression régulée, dans lequel le courant massique est de préférence entre 1 et 5 pour cent, de manière particulièrement préférée entre 1 et 2 pour cent du courant massique du gaz d'échappement évacué dans le fonctionnement maximal de la machine de travail (2).

5. Procédé selon l'une des revendications précédentes, **caractérisé en ce que** le gaz est amené au huitième de la section (22) à pression régulée avec la conduite de gaz comprimé (5) qui est plus près du dispositif de régulation (21) que de la machine de travail (2) et/ou dans une zone qui est éloignée de moins de 10 cm du dispositif de régulation (21).

6. Procédé selon l'une des revendications précédentes, **caractérisé en ce que** la conduite de gaz comprimé (5) présente une résistance à l'écoulement qui est sensiblement ou au moins si grande qu'en cas de différence de pression du gaz amené au début de la conduite de gaz comprimé (5) et de la pression du gaz d'échappement dans la conduite d'échappement (20), en particulier dans la section (22) à pression régulée, de plus de 50 mbar, de préférence de plus de 100 mbar, le courant massique de la conduite de gaz comprimé (5) dans la section (22) à pression régulée est inférieur à 10 pour cent, de préférence inférieur à 5 pour cent du gaz d'échappement évacué dans le fonctionnement maximal de la machine de travail (2).

7. Procédé selon l'une des revendications précédentes, **caractérisé en ce qu'**un gaz de combustion, de préférence de l'air, est amené à la machine de travail (2) par une conduite d'alimentation (10), et que la conduite d'alimentation (10) présente un dispositif de régulation (11), de préférence comprenant une soupape d'étranglement ou un clapet d'étranglement qui délimite une section (12) à pression régulée de la conduite d'alimentation (10), dans lequel du gaz est guidé par le biais de la conduite de gaz comprimé (5) d'une section de la conduite d'alimentation (10) avant le dispositif de régulation (11) de la conduite d'alimentation (10) à la section (22) à pression régulée de la conduite d'échappement (20), dans lequel de préférence avec un premier dispositif de transport de gaz (13), de manière particulièrement préférée une soufflante à haute pression, le gaz de combustion est soufflé dans la conduite d'alimentation (20) et une pression d'alimentation est générée,
le gaz de combustion est conditionné dans un trajet de préparation d'air (14) en ce qui concerne la température et l'humidité et/ou
le gaz d'échappement est aspiré dans la conduite d'échappement (20) par un second dispositif de transport de gaz (23), de manière particulièrement préférée une soufflante.

8. Procédé selon la revendication 7, **caractérisé en ce que** du gaz de combustion est échappé avec une soupape d'écoulement (15) de la conduite d'alimentation (10), de préférence une zone avant le dispositif de régulation (11) de la conduite d'alimentation (10), lequel n'est pas nécessaire pour la machine de travail (2).

9. Procédé selon l'une des revendications précédentes, **caractérisé en ce que** la pression est mesurée dans au moins une des sections (12, 22) respectivement à pression régulée à plus d'un endroit, de préférence à trois endroits.

10. Procédé selon la revendication 9, **caractérisé en ce que** de la pression est réglée dans la section (12, 22) à pression régulée respective sur la base d'une valeur moyenne arithmétique de préférence pondérée des pressions mesurées à plusieurs endroits dans la section (12, 22) à pression régulée par régulation du dispositif de régulation (11, 21) respectif.

11. Procédé selon la revendication 9 ou 10, **caractérisé en ce que** la pression dans la section (12, 22) à pression régulée respective est mesurée à un premier endroit (4) dans une zone de début de la section (12, 22) à pression régulée respective, à un deuxième endroit (4') sensiblement au milieu de la section (12, 22) à pression régulée respective et à un troisième endroit (4") dans une zone d'extrémité de la section (12, 22) à pression régulée respective, dans lequel de préférence la zone de début s'étend loin d'un début (18, 28) de la section (12, 22) à pression régulée jusqu'à moins de 30 cm, de préférence jusqu'à moins de 10 cm du début (18, 28) de la section (12, 22) à pression régulée respective,
la zone d'extrémité s'étend loin d'une extrémité (19, 29) de la section (12, 22) à pression régulée respective jusqu'à moins de 30 cm, de préférence jusqu'à moins de 10 cm d'une extrémité (19, 29) de la section (12, 22) à pression régulée respective, et/ou
la pression dans la section (12, 22) à pression régulée respective est réglée sur la base d'une valeur moyenne arithmétique de la pression aux premier, deuxième et troisième endroits (4, 4', 4"), dans lequel lors de la formation de la valeur moyenne la pression du premier endroit (4) est pondérée avec un quart, la pression du deuxième endroit (4') avec une moitié et la pression du troisième endroit (4") avec un quart et dans lequel de manière particulièrement préférée une valeur moyenne temporelle est formée sur une période qui est égale ou supérieure à la durée de période d'une quatrième résonance d'une onde de pression stationnaire dans la section (12, 22) à pression régulée respective.

12. Dispositif (1) pour la régulation de pression du gaz d'échappement d'une machine de travail (2), en particulier d'un moteur à combustion, de manière particulièrement préférée dans un banc d'essai, présentant
une conduite d'échappement (20) pour l'évacuation de gaz d'échappement de la machine de travail (2) avec un dispositif de régulation (21), de préférence d'un clapet de régulation ou d'étranglement qui délimite une section (22) à pression régulée, dans lequel la section (22) à pression régulée présente une conduite de gaz comprimé (5) pour l'amenée de gaz régulée,
**caractérisé en ce que**
la conduite de gaz comprimé (5) est reliée dans le quart de la section (22) à pression régulée à celle-ci, lequel est plus près du dispositif de régulation (21) que de la machine de travail (2) et/ou dans une zone qui est éloignée de moins de 30 cm du dispositif de régulation (21).

13. Dispositif selon la revendication 12, **caractérisé en ce que** la conduite de gaz comprimé (5) présente une soupape et/ou un étranglement qui peuvent être commandés de préférence respectivement à la main et/ou électriquement,
la conduite de gaz comprimé (5) est reliée dans le huitième de la section (22) à pression régulée à celle-ci, lequel est plus près du dispositif de régulation (21) que de la machine de travail (2) et/ou dans une zone qui est éloignée de moins de 10 cm du dispositif de régulation (21) et/ou
la conduite de gaz comprimé (5) présente une résistance à l'écoulement qui est sensiblement ou au moins si grande qu'en cas de différence de pression du gaz amené au début de la conduite de gaz comprimé (5) et de la pression du gaz d'échappement dans la conduite d'échappement (20), en particulier dans la section à pression régulée (22), de plus de 50 mbar, de préférence de plus de 100 mbar, le courant massique de la conduite de gaz comprimé (5) dans la section (22) à pression régulée est inférieur à 10 pour cent, de préférence inférieur à 5 pour cent du gaz d'échappement évacué dans le fonctionnement maximal de la machine de travail (2).

14. Dispositif selon la revendication 12 ou 13, **caractérisé en ce que** le dispositif (1) présente une conduite d'alimentation (10) pour l'amenée de gaz de combustion à la machine de travail (2) avec un dispositif de régulation (11), de préférence un clapet de régulation ou d'étranglement qui délimite une section (12) à pression régulée de la conduite d'alimentation (10), et que la conduite de gaz comprimé (5) est reliée à la conduite d'alimentation (10) avant le dispositif de régulation (11) de la conduite d'alimentation (10),
dans lequel de préférence
la section (11) à pression régulée de la conduite d'alimentation (10) présente une soupape d'écoulement (15),
la conduite d'alimentation (10) présente un premier dispositif de transport de gaz (13), de manière particulièrement préférée une soufflante à haute pression, et/ou un trajet de préparation de gaz (14) et/ou
la conduite d'échappement (20) présente un second dispositif de transport de gaz (23), de préférence une soufflante.

15. Dispositif selon l'une des revendications 12 à 14, **caractérisé en ce que** la section (12, 22) à pression régulée respective présente plus d'un capteur de pression (3), de préférence trois capteurs de pression.
